# EUROPEAN PATENT SPECIFICATION

(11) **EP 2 506 421 B1**
(45) Date of publication and mention of the grant of the patent: **08.07.2020**
(21) Application number: 11182374.6
(22) Date of filing: 22.09.2011
(51) Int. Cl.: H02M 7/5387, H02M 1/32, B60L 9/00, B60L 9/22, B60L 15/00, H02M 7/00

(54) **Electric vehicle control device**
Elektrische Ansteuervorrichtung für ein Fahrzeug
Dispositif de commande pour un véhicule électrique

(30) Priority: 31.03.2011 JP 2011080240
(43) Date of publication of application: 03.10.2012
(73) Proprietor: Kabushiki Kaisha Toshiba, Minato-ku, Tokyo 105-8001 (JP)
(72) Inventor: Toda, Shinichi, Tokyo, 105-8001 (JP); Yasuoka, Ikuo, Tokyo, 105-8001 (JP); Nakazawa, Yosuke, Tokyo, 105-8001 (JP)
(74) Representative: AWA Sweden AB

(56) References cited:
- JP-A- 2006 149 199
- JP-A- 2007 089 258
- JP-A- 2009 072 049

## Description

### FIELD

Embodiments described herein relate generally to the electric vehicle control device which uses a refrigeration unit.

### BACKGROUND

Generally the permanent magnet synchronous motor utilizes energy efficiently as compared with an induction motor. A permanent magnet synchronous motor has less generation of heat than an induction motor. Therefore, the permanent magnet synchronous motor can save weight compared to an induction motor. Therefore, the demand for a permanent magnet synchronous motor is increasing in recent years.

Since the permanent magnet synchronous motor is controlled by voltage from a VVVF inverter according to the rotational position of the rotor of each permanent magnet synchronous motor, the inverter is required to perform individual control for every permanent magnet synchronous motor. As a result, a plurality of VVVF inverters are equipped so that each inverter can control one permanent magnet synchronous motor, and also a gate control device is set in each VVVF inverter, in order to control each VVVF inverter.

For this reason, in the system configuration which controls the conventional permanent magnet synchronous motor individually, the device is enlarged and its cost increases due to the increase of the number of apparatus.

In JP2009072049A, an electric vehicle controller is disclosed. In JP2007089258A, an inverter is disclosed. In JP2006149199A, a power conversion apparatus for a rail vehicle is disclosed.

### BRIEF DESCRIPTION OF THE DRAWINGS

FIG. 1 shows the circuit lineblock diagram of a first embodiment.
FIG. 2 is a representative circuit schematic of the semiconductor device package of a first embodiment.
FIG. 3 is the voltage output and rise-in-heat figure of a semiconductor device package of a first embodiment.
FIG. 4 is an outline view of a first embodiment.
FIG. 5 is a circuit lineblock diagram of a Second Embodiment.
FIG. 6 is a circuit lineblock diagram of a Third Embodiment.
FIG. 7 is U phase circuit diagram of 3 level power converter of fourth embodiment.
FIG. 8 is an outline view of 3 level power converter of fourth embodiment.

### SUMMARY

The present invention provides an electric vehicle control device according to claim 1. Preferred embodiments are defined in the dependent claims.

### DETAILED DESCRIPTION

To achieve the above-described object, an electric vehicle control device according to the present disclosure comprising a motor, a plurality of inverters comprising a semiconductor device package and a cooler unit to transform DC power to AC power to supply AC power to the motor with switching a semiconductor device, wherein the semiconductor device package stored at least two semiconductor device, wherein the cooler unit connected to semiconductor device package of plurality inverter to cool the semiconductor device package of plurality inverter.

### (First embodiment)

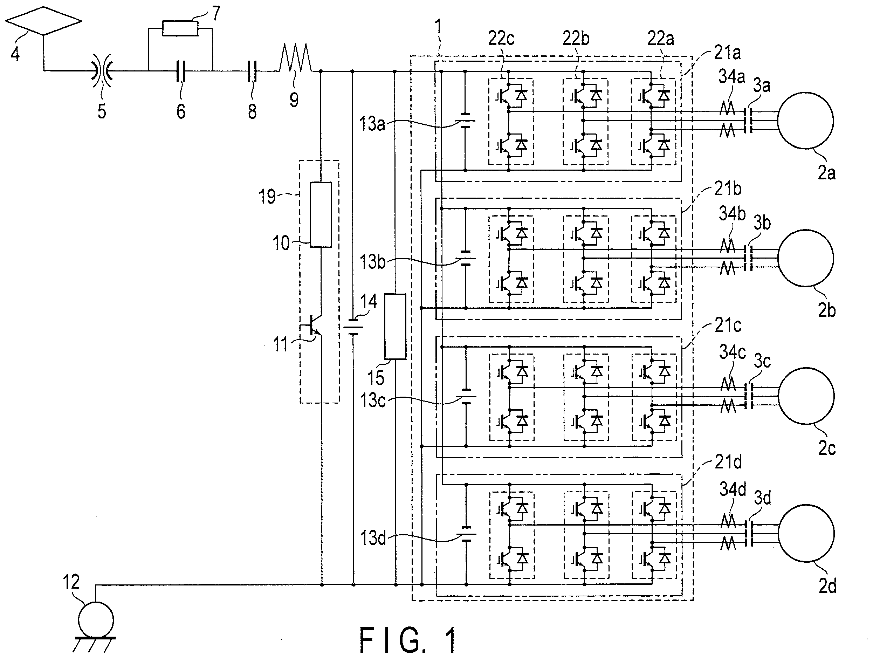

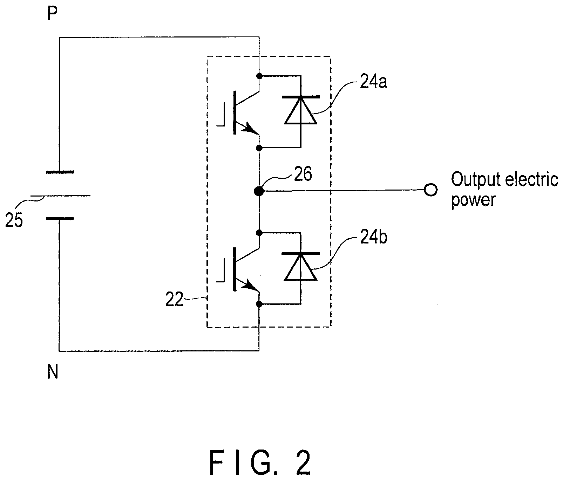

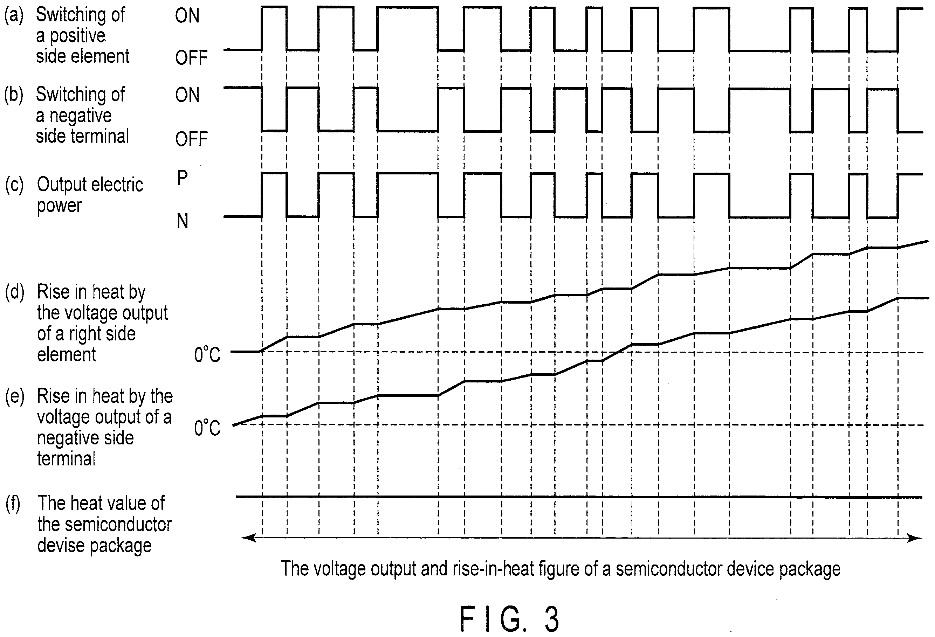

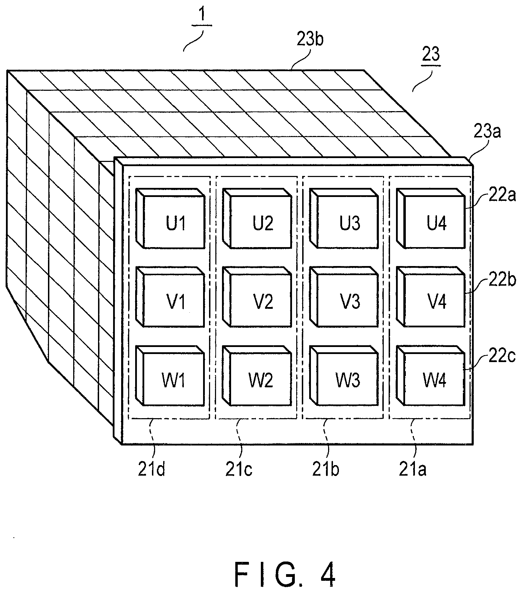

A first embodiment is described with reference to several figures. FIG. 1 is a circuit lineblock diagram of the first embodiment. FIG. 2 is a representative circuit schematic of the semiconductor device of a first embodiment. FIG. 3 is the voltage output and rise-in-heat figure of a semiconductor device of the first embodiment. FIG. 4 is an outline view of the first embodiment.

### (Element: 4 in 1 inverter unit)

With reference to FIG. 1, in the electric vehicle control device of this embodiment, the first 4 in 1 inverter unit's direct-current side comprises current collector 4, high-speed circuit breaker 5, short circuit contactor 6 for charge resistance, charge resistor 7, open contactor 8, filter reactor 9, excess voltage control resistor 10, switching element 11 for excess voltage control, wheel 12, and filter reactor 14. The alternating current side of a 4 in 1 inverter comprises permanent magnet synchronous motor 2 (2a, 2b, 2c, 2d), motor opening contactor 3 (3a, 3b, 3c, 3d), and current sensor 34 (34a, 34b, 34c, 34d).

Current collector 4 is connected with high-speed circuit breaker 5, and high-speed circuit breaker 5 is connected with short circuit contactor 6 for charge resistance. The parallel circuit which comprises contactor 6 and resistor 7 is connected with contactor 8. Contactor 8 is connected with filter reactor 9. Filter reactor 9 is connected with the end of first 4 in 1 inverter unit 1, and the other end of first 4 in 1 inverter unit 1 is connected with wheel 12. Series circuit 19 for excess voltage control comprises resistor 10 and switching element 11. One terminal side of series circuit 19 is connected between filter reactor 9 and first 4 in 1 inverter unit 1, and, another terminal side of series circuit 19 for excess voltage control is connected between first 4 in 1 inverter unit 1 and wheel 12. Both ends of filter capacitor 14 are connected between direct-current circuit 19 for excess voltage control, and 1st 4 in 1 inverter unit 1. In the alternating current side of first 4 in 1 inverter unit 1, current sensors 34a, 34b, 34c, and 34d are set on three-phase lines. Four permanent magnet synchronous motors 2a, 2b, 2c, and 2d are connected to first 4 in 1 inverter unit 1 via motor opening contactors (MOCKs) 3a, 3b, 3c, and 3d.

First 4 in 1 inverter unit 1 comprises VVVF inverter 21a, VVVF inverter 21b, VVVF inverter 21c, and VVVF inverter 21d. VVVF inverter 21a, VVVF inverter 21b, VVVF inverter 21c, and VVVF inverter 21d are connected in parallel.

VVVF inverter 21a comprises U phase semiconductor device package 22a, V phase semiconductor device package 22b, W phase semiconductor device package 22c, and filter capacitor 13a for inverters. U phase semiconductor device package 22a, V phase semiconductor device package 22b, and W phase semiconductor device package 22c are connected in parallel. Filter capacitor 13a for inverters is connected to the direct-current side of W phase semiconductor device package 22c in parallel. As for VVVF inverter 21b, VVVF inverter 21c, and VVVF inverter 21d, filter capacitors 13b, 13c, and 13d are connected similarly.

### (Elements: Semiconductor device package)

FIG. 2 is a representative circuit schematic of a semiconductor device package. FIG. 3 is a figure showing the switching state of the semiconductor device in a semiconductor device package, and the temperature state of the semiconductor device package by the switching.

As shown in FIG. 2, positive side element 24a of an upper arm and negative side element 24b of a lower arm are connected to semiconductor device package 22 in series. Power supply 25 is connected to the output side of negative side element 24b and the input side of positive side element 24a. Given voltage is outputted from neutral point 26 between positive side element 24a and negative side element 24b. In this example, current flows into positive side element 24a from power supply 25 when positive side element 24a is set to ON, and negative side element 24b is set to OFF, and given voltage is outputted from neutral point 26. When right side element 24a is set to OFF and negative side element 24b is set to ON, current flows into negative side element 24b from power supply 25, and given voltage is outputted from neutral point 26. A direct current is transformed into an alternating current by repeating such switching.

FIG. 3 (a) shows a switching condition of a positive side element, and FIG. 3 (b) shows a switching condition of a negative side terminal. FIG. 3 (c) shows an output voltage applied to neutral point 26 when the positive side element and the negative side element a controlled in accordance with FIGS. 3 (a) and 3 (b). FIG. 3 (d) shows the graph which showed the rise in heat by the voltage output of a positive side element. FIG. 3 (e) shows the graph which showed the rise in heat by the voltage output of a negative side element. As shown in FIG. 3 (d), the temperature of positive side element 24a rises, when positive side element 24a of FIG. 3 (a) is an ON state, and does not rise in an OFF state. Therefore, the temperature of right side element 24a carries out gradual increase by repeating switching operation ON/OFF. As shown in FIG. 3 (e), the temperature of negative side element 24b will rise by repeating switching operation ON/OFF of FIG. 3 (b) like a positive side element. However, the ON state of positive side element 24a and the ON state of negative side element 24b are performed one after the other within semiconductor device package 22. Therefore, the heat value of the semiconductor device package 22 whole becomes fixed as shown in FIG. 3 (f).

It is 4 in 1 inverter unit 1 which unitized four sets of VVVF inverters 21 which use the above semiconductor device packages 22. FIG. 4 shows the appearance of the device of the first 4 in 1 inverter unit 1. As shown in FIG. 4, 1st 4 in 1 inverter unit 1 is the composition that one cooler structure 23 was installed for four VVVF inverters 21a, VVVF inverter 21b, VVVF inverter 21c, and VVVF inverter 21d. VVVF inverters 21a, 21b, 21c, and 21d are attached to heat-receiving board 23a which composes a part of cooler structure 23. Radiator 23b is connected to the opposite field of which VVVF inverters 21a, 21b, 21c, and 21d of heat-receiving board 23a are attached.

### (OPERATION)

An operation of the electric vehicle control device of this embodiment is explained. Wire direct-current electric power is supplied to an electric vehicle control device via current collector 4. The direct-current electric power supplied via current collector 4 passes along high speed circuit breaker 5, charge resistor 7, contact machine 8, and filter reactor 9, and is supplied to filter capacitor 14. A Direct current flows into filter capacitor 14 and the filter capacitor (13a, 13b, 13c, 13d) of each inverter connected in parallel. A Direct current's accumulation of sufficient electric charge will throw in contact machine 6.

The direct-current electric power from wire passes along high speed circuit breaker 5, short circuit contact machine 6 for charge resistance, contact machine 7 for opening, and filter reactor 9, and is supplied to first 4 in 1 inverter unit 1.

When direct-current electric power is supplied to first 4 in 1 inverter unit 1, Direct-current electric power is supplied to the semiconductor device which is store in U, V, W phase semiconductor device package 22a, 22b and 22c of VVVF inverter 21a, 21b, 21c, and 21d.

Direct-current electric power is transformed into alternating current electric power by switching of the semiconductor device of VVVF inverter 21. The transformed alternating current electric power is supplied to four permanent magnet synchronous motors 2, and the drive of permanent magnet synchronous motor 2 is started. In this embodiment, when the wire voltage of 1500V is impressed to first 4 in 1 inverter unit 1, the same voltage of 1500V also as VVVF inverter 21a, VVVF inverter 21b, VVVF inverter 21c, and VVVF inverter 21d is impressed. If the voltage of 1500V is impressed to each which is VVVF inverter 21a, VVVF inverter 21b, VVVF inverter 21c, and VVVF inverter 21d, the current will flow into permanent magnet synchronous motor 2, and permanent magnet synchronous motor 2 will be driven.

Thus, although permanent magnet synchronous motor 2 will be in the state which can be driven by the electric energy conversion of the semiconductor device of first 4 in 1 inverter unit 1, but an electric-energy-conversion loss occurs in the case of the electric energy conversion. An electric-energy-conversion loss serves as heat, and is generated from a semiconductor device. The heat generated from the semiconductor device spreads to heat-receiving board 23a. The heat transferred to heat-receiving board 23a will spread to radiator 23b, which will radiate heat from radiator 23b to outside.

Therefore, the heat generated by electric-energy-conversion loss will be released to outside the product, without stopping at the inside of the product.

When a control device (not shown) detects a breakdown and one set of VVVF inverter 21 opens breaker 5 within first 4 in 1 inverter unit 1 during the drive of an electric vehicle control device, four sets of all VVVF inverters 21 will be opened.

When direct-current voltage sensor 15 detects that the direct-current electric power supplied to 1st 4 in 1 inverter unit 1 became excessive, a control device turns on switching element 11 and makes direct-current electric power consume by resistor 10. The control device is controlling ON and OFF of switching element 11 by the output of a direct-current voltage sensor.

### (EFFECT)

The electric vehicle control device composed in this way can be cooled more efficiently than the conventional radiator, because the heat value of first 4 in 1 inverter unit 1 is also equalized with the whole device, although electric-energy-conversion units of plurality are stored. When the semiconductor device was being individually installed in radiator 23b like before, the installing space of 24 semiconductor devices was needed, but it was able to be considered as 12 installing spaces by using a device package. The operating efficiency of cooler 23 improved by combining two semiconductor devices so that the quantity of heat generated from a device package might become uniform, and installation by a small space was attained.

The number of parts have been reduced by making filter reactor 9, excess voltage control resistor 10, and switching element 11 for excess voltage control common in a circuit.

It is also possible to store direct-current voltage sensor 15, current sensors 34a, 34b, 34c, and 34d, and motor opening contact machines 3a, 3b, 3c, and 3d in 4 in 1 inverter unit 1.

It is possible by being able to acquire the same effect as this embodiment also in that case, and storing many devices in one case to simplify wiring and to easy manufacture of the whole device and installation.

It is also possible to delete filter capacitors 13a, 13b, 13c, and 13d, and to work in four sets of VVVF inverters 21 by shared filter capacitor 14 in FIG. 1. It becomes possible to share the right side conductor by the side of a direct current, and the negative side conductor by the side of a direct current between sharing filter capacitor 14 between four sets of VVVF inverters 21 by four sets of VVVF inverters. Therefore, it is more possible than the case where filter capacitors 13a, 13b, 13c, and 13d are installed to reduce part mark.

### (Second Embodiment)

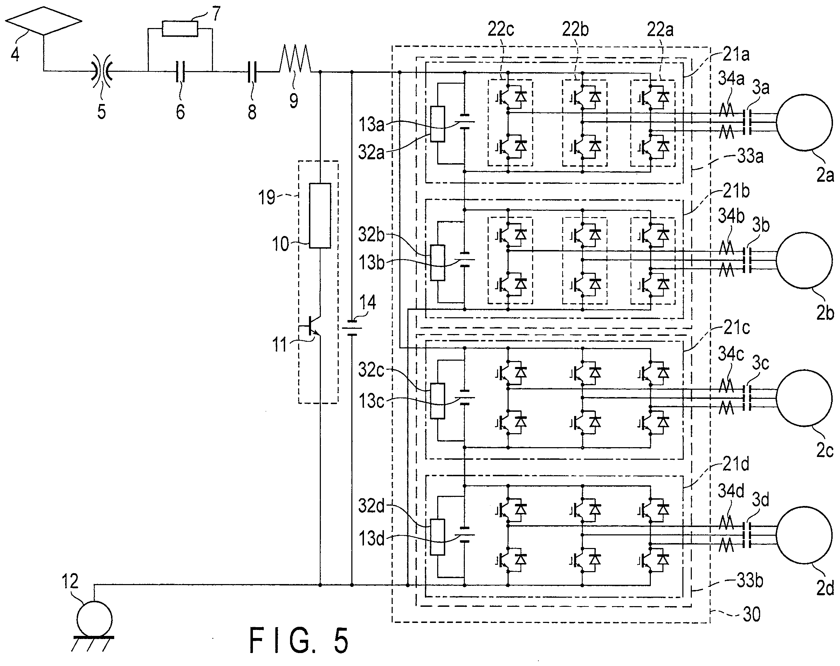

A Second Embodiment is described with reference to figures. FIG. 5 is a circuit line block diagram of a Second Embodiment. About what takes the same composition as FIGS. 1 thru/or 4, a same sign is attached and explanation is omitted.

### (Elements)

The connection states of a VVVF inverter and direct current voltage sensors are different between first embodiment of electric vehicle control device and second embodiment. The point is explained below.

The inside of 4 in 1 inverter unit 1 of a second comprises VVVF inverter 21a, VVVF inverter 21b, VVVF inverter 21c, and VVVF inverter 21d. VVVF inverter 21a and VVVF inverter 21b which were connected in series compose inverter series circuit 33a, and compose VVVF inverter 21c and VVVF inverter 21d which were connected in series from inverter series circuit 33b. Inverter series circuit 33a and inverter series circuit 33b are connected in parallel. Filter capacitor 13a for inverters is connected to the direct-current side of W phase semiconductor device package 22c of VVVF inverter 21a. Direct-current voltage sensor 32a is connected to the direct-current side of W phase semiconductor device package 22c in parallel with filter capacitor 13a for inverters. As for VVVF inverter 21b, VVVF inverter 21c, and VVVF inverter 21d, filter capacitors 13b, 13c, and 13d for inverters and direct-current voltage sensors 32b, 32c, and 32d are connected with the same composition as VVVF inverter unit 21a.

### (OPERATION)

An operation of the electric vehicle control device of this embodiment is explained. For example, when the wire voltage of 1500V is impressed to 4 in 1 inverter unit 30 of a second, the same voltage of 1500V also as inverter series circuits 33a and 33b is impressed. Within inverter series circuit 33a and 33b, the wire voltage of 1500V is divided, and the voltage which is 750V is impressed to each VVVF inverter 21a, VVVF inverter 21b, VVVF inverter 21c, and VVVF inverter 21d.

The current corresponding to the voltage flows and permanent magnet synchronous motor 2 is driven by the current.

In that case, direct-current voltage sensor 32a supervises the voltage state of VVVF inverter unit 21a by detecting the voltage value of filter capacitor 13a for inverters. Direct-current voltage sensor 32b supervises the voltage state of VVVF inverter unit 21b by detecting the voltage value of filter capacitor 13b for inverters. Direct-current voltage sensor 32c supervises the voltage state of VVVF inverter unit 21c by detecting the voltage value of filter capacitor 13c for inverters. Direct-current voltage sensor 32d supervises a VVVF inverter unit's 21d voltage state by detecting the voltage value of filter capacitor 13d for inverters.

### (Effect of this embodiment)

In addition to the effect of first embodiment, such an electric vehicle control device of composition divided the wire voltage which is impressed to VVVF inverter 21. Therefore, switch a semiconductor device on lower voltage than the first embodiment, it becomes possible to reduce the heat generated as an electric-energy-conversion loss.

Miniaturization of cooler structure and energy saving at the time of a device drive can be achieved by generating of heat being reduced.
It can control by detecting the voltage value of each VVVF inverter 21 more correctly using direct-current voltage sensor 32.

### (Third Embodiment)

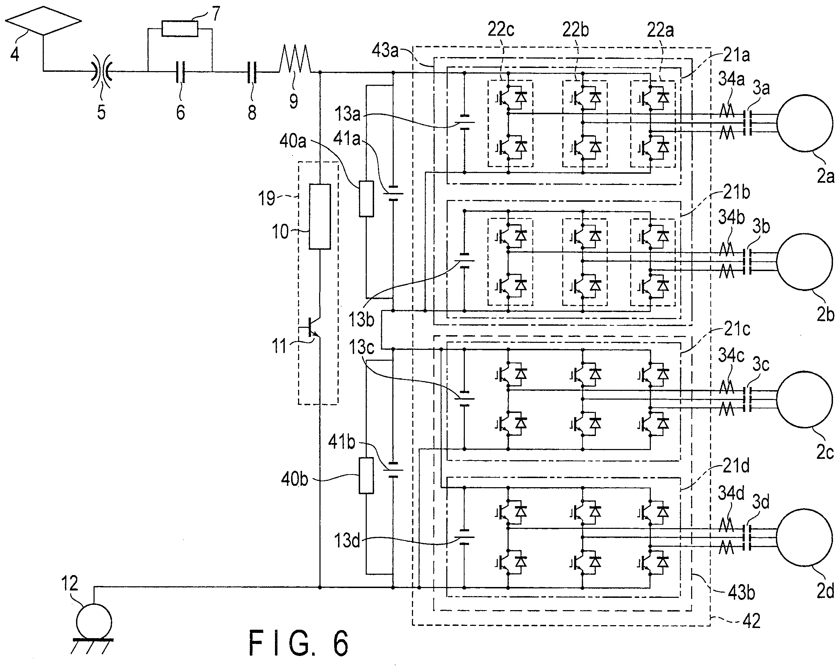

A Third Embodiment is described with reference to figures. FIG. 6 is a circuit lineblock diagram of a Third Embodiment. About what takes the same composition as FIGS. 1 thru/or 4, a same sign is attached and explanation is omitted.

### (Elements)

The connection states of a VVVF inverter, direct current voltage sensors and filter capacitor are different between first embodiment of electric vehicle control device and the third embodiment. The point is explained below.

The inside of third 4 in 1 inverter unit 42 comprises VVVF inverter 21a, VVVF inverter 21b, VVVF inverter 21c, and VVVF inverter 21d. VVVF inverter 21a and VVVF inverter 21b which were connected in parallel compose inverter parallel circuit 43a. VVVF inverter 21c and VVVF inverter 21d which were connected in parallel consist of inverter parallel circuits 43b. Inverter parallel circuit 43a and inverter parallel circuit 43b are connected in series. Direct-current voltage sensor 40a connected in parallel with filter capacitor 41a and filter capacitor 41a are connected to the direct-current side of inverter parallel circuit 43a. As for inverter parallel circuit 43b, filter capacitor 41b and direct-current voltage sensor 40b are connected with the same composition as inverter parallel circuit 43a.

### (OPERATION)

Next, the operation of this embodiment is explained. In this embodiment, when the wire voltage of 1500V is impressed to third 4 in 1 inverter unit 42, the voltage of 750V by which partial pressure was carried out is impressed to inverter parallel circuits 43a and 43b. If the voltage of 750V is impressed to inverter parallel circuits 43a and 43b, the voltage of 750V will be impressed to each which is VVVF inverter 21a, VVVF inverter 21b, VVVF inverter 21c, and VVVF inverter 21d. The current corresponding to the voltage flows and permanent magnet synchronous motor 2 is driven by the current.

### (Effect of this embodiment)

This embodiment can obtain the same operation as first embodiment. In addition to the effect of first embodiment, such an electric vehicle control device of composition divided the wire voltage which is impressed to VVVF inverter 21. Therefore, switch a semiconductor device on lower voltage than the first embodiment, it becomes possible to reduce the heat generated as an electric-energy-conversion loss. Miniaturization of cooler structure and energy saving at the time of a device drive can be achieved by generating of heat being reduced.

Because wire voltage detects the voltage of inverter parallel circuits 43a and 43b by which partial pressure is carried out by direct-current voltage sensors 40a and 40b, a voltage value required for control can be detected, and part mark can be made less than a Second Embodiment.

### (Fourth embodiment)

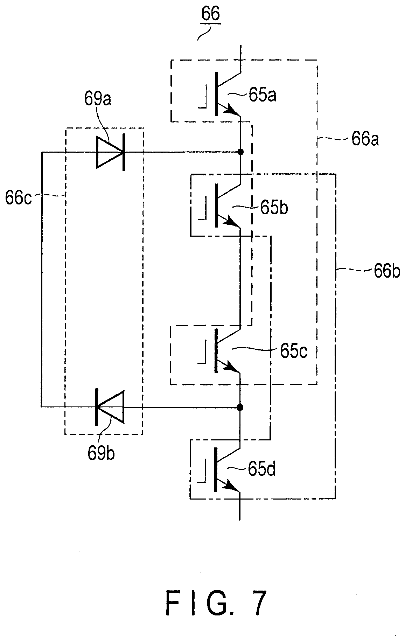

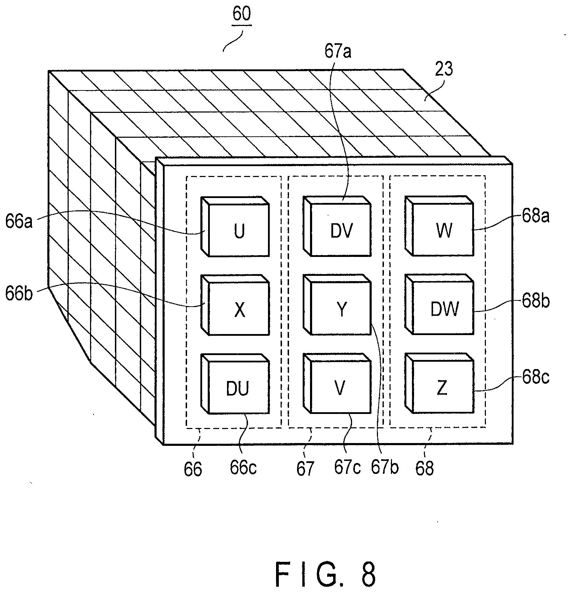

Fourth embodiment is described with reference to figures. FIG. 7 is U phase circuit diagram of 3 level power converter of fourth embodiment. FIG. 8 is an outline view of the power converter of fourth embodiment. About what takes the same composition as FIGS. 1 thru/or 4, a same sign is attached and explanation is omitted.

### (Elements)

This embodiment applies semiconductor device package 22 of first embodiment to the fourth inverter unit that is a power converter of three levels. Hereafter, the point is explained. As shown in FIG. 7, U phase circuit of 3 level power converter of this embodiment comprises first element 65a, second element 65b, third element 65c, fourth element 65d and first clamp diode 69a, and second clamp diode 69b.

Hereafter, composition of U phase circuit 66 is explained as a example. The first element 65a, the second element 65b, the third element 65c, and the fourth element 65d are U phase series circuits connected in series. First clamp diode 69a and second clamp diode 69b are connected in series. The end of 1st clamp diode 65a is connected between the first element 65a and the second element 65b. The end of clamp diode 65b of a second is connected between the third element 65c and the fourth element 65d. The first element 65a and third element 65c are stored by first U phase semiconductor device package 66a. The second element 65b and fourth element 65d are stored by second U phase semiconductor device package 66b. First clamp diode 69a and second clamp diode 69b are stored by third U phase semiconductor device package 66c. Like U phase circuit 66, first V phase semiconductor device package 67a of V phase circuit 67, V phase semiconductor-device-package 67c, second V phase semiconductor device package 67b and the third reach, first W phase semiconductor device package 68a of W phase circuit 68, second W phase semiconductor device package 68b, and third W phase semiconductor device package 68c are composed.

Next, with reference to FIG. 8, U phase circuit 66, V phase circuit 67, and W phase circuit 68 which are established in heat-receiving board 23a of cooler structure 23, are explained. As shown in FIG. 8, U phase circuit 66 and W phase circuit 68 are located at the end of heat-receiving board 23a, and V phase circuit 67 is arranged between U phase circuit 66 and W phase circuit 68. U phase circuit 66 is located with the permutation of first U phase semiconductor device package 66a, second U phase semiconductor device package 66b, and third U phase semiconductor device package 66c. V phase circuit 67 is located with the permutation of the third semiconductor device package 67c of V phase, the second semiconductor device package 67b of V phase, and the first semiconductor device package 67a of V phase. W phase circuit 68 is located with the permutation of the first semiconductor device package 68a of W phase, the third semiconductor device package 68c of W phase, and the second semiconductor device package 68b of W phase.

### (OPERATION)

In U phase circuit 66, when a semiconductor device performs switching for electric energy conversion, second element 65b Reaches and the third element 65c of the inductance becomes the largest. Second element 65b of the heat value and the third element 65c of the heat value becomes the largest. Next, the heat value from the first element 65a and fourth element 56d becomes large.

There is least heat value from first clamp diode 69a and second clamp diode 69b. V phase circuit 67 and W phase circuit 68 are also the same. Therefore, the heat value of the first semiconductor device package 66a, 67a, 68a which stored combining the first element 64a and third element 65c is equivalent to the heat value of semiconductor device packages 66b, 67b, and 68b of the second stored combining the second element 65b and fourth element 65d. The heat value of the third semiconductor device package 66c, 67c, 68c which stored combining first clamp diode 69a and second clamp diode 69b is lower than the heat value of the first semiconductor device package 66a, 67a, 68a and the second semiconductor device packages 66b, 67b, 68b.

### (Effect of this embodiment)

In the electric vehicle control device of this embodiment, the third semiconductor device package 66c, 67c and 68c which have little heat value are located between the first semiconductor device package 66a, 67a, and 68a which have much heat value and the second semiconductor device packages 66b, 67b, and 68b which have much heat value. Therefore, the heat is easy to be equalized with heat-receiving board 2, and it make easy to cool efficiently at cooler guard 23. Therefore, it is able to make 3 level power converter miniaturization, unless 3 level power converter has with many semiconductor devices sets.

The semiconductor device package 22 can apply not only for 4 in 1 inverter unit but also other composition, such as a 2 in 1 inverter unit which comprise two inverter.

## Claims

1. An electric vehicle control device comprising:
an inverter unit (1) including a plurality of inverters (21a, 21b, 21c, and 21d), each of the inverters including U phase, V phase, and W phase and outputting electric power for driving an electric motor (2), each of the U, V, and W phases including a positive side element (24a) of an upper arm and a negative side element (24b) of a lower arm which are electrically connected in series, and
a cooler structure (23) configured to radiate heat generated by the positive side element (24a) and the negative side element (24b),
wherein the cooler structure (23) includes a heat-receiving board (23a) for receiving heat from the positive side element and the negative side element of each of the phases, and a radiator (23b) attached to one surface of the heat-receiving board (23a),
**characterized in that**
the positive side element (24a) and the negative side element (24b) of each of the phases are stored in a semiconductor device package (22),
the semiconductor device packages (22) are attached to the other surface of the heat-receiving board (23a) opposite to the surface to which the radiator (23b) is attached,
the semiconductor device packages (22) of the U, V, and W phases of each of the inverters (21a, 21b, 21c, and 21d) are arranged in a line respectively on the other surface, and
the semiconductor device packages (22) of each of the U, V, and W phases are arranged in a same row on the other surface.

2. The electric vehicle control device according to claim 1 **characterized in that** the inverter unit (1) includes a first inverter unit (33a) and a second inverter unit (33b) which are connected in parallel to each other, each of the first inverter unit and the second inverter unit include a same number of inverters, and the inverters of each of the first inverter unit and the second inverter unit are connected in series to each other.

3. The electric vehicle control device according to claim 1, **characterized in that** the inverter unit (1) includes a first inverter unit (43a) and a second inverter unit (43b) which are connected in series to each other, each of the first inverter unit and the second inverter unit include a same number of the inverters, and the inverters of each of the first inverter unit and the second inverter unit are connected in parallel to each other.

## Patentansprüche

1. Eine Steuervorrichtung für ein elektrisches Fahrzeug umfassend:
eine Wechselrichtereinheit (1), die eine Vielzahl von Wechselrichtern (21a, 21b, 21c und 21d) beinhaltet, wobei jede den Wechselrichtern eine U Phase, eine V Phase und eine W Phase beinhaltet, und elektrische Leistung ausgebend zum Antreiben eines elektrischen Motors (2), jede der U, V und W Phasen beinhaltet ein positives Seitenelement (24a) von einem oberen Arme und ein negatives Seitenelement (24b) von einem unterem Arm, welche elektrisch in Serie geschaltet sind, und
eine Kühlerstruktur (23) konfiguriert, um Wärme, die von dem positiven Seitenelement (24a) oder dem negativen Seitenelement (24b) erzeugt wird, abzustrahlen,
wobei die Kühlerstruktur (23) eine Wärme empfangende Platte (23a) zum Aufnehmen von Wärme von dem positiven Seitenelement und dem negativen Seitenelement von jeder der Phasen beinhaltet, und einen Strahler (23b), der an einer Oberfläche der Wärme empfangenden Platte (23a) angebracht ist,
**dadurch gekennzeichnet, dass**
das positive Seitenelement (24a) und das negative Seitenelement (24b) von jeder der Phasen in einem Halbleitervorrichtungspaket (22) gelagert werden,
die Halbleitervorrichtungspakete (22) sind an der anderen Oberfläche der Wärme empfangende Platte (23a), die gegenüber der Oberfläche an welcher der Strahler (23b) angebracht ist, angebracht,
die Halbleitervorrichtungspakete (22) der U, V und W Phasen von jedem der Wechselrichter (21a, 21b, 21c und 21d) sind in einer Line beziehungsweise auf der anderen Oberfläche angeordnet, und
die Halbleitervorrichtungspakete (22) von jeder der U, V und W Phasen sind in einer gleichen Zeile auf der anderen Oberfläche angeordnet.

2. Die Steuervorrichtung für ein elektrisches Fahrzeug nach Anspruch 1, **dadurch gekennzeichnet, dass** die Wechselrichtereinheit (1) eine erste Wechselrichtereinheit (33a) und eine zweite Wechselrichtereinheit (33b) beinhaltet, welche in parallel zueinander geschaltet sind, wobei jede der ersten Wechselrichtereinheit und der zweiten Wechselrichtereinheit die gleiche Anzahl an Wechselrichtern beinhalten und die Wechselrichter von der ersten und der zweiten Wechselrichtereinheit in Reihe miteinander geschaltet sind.

3. Die Steuervorrichtung für ein elektrisches Fahrzeug nach Anspruch 1, **dadurch gekennzeichnet, dass** die Wechselrichtereinheit (1) eine erste Wechselrichtereinheit (43a) und eine zweite Wechselrichtereinheit (43b) beinhaltet, welche in Reihe miteinander geschaltet sind, wobei jede der ersten Wechselrichtereinheit und der zweiten Wechselrichtereinheit die gleiche Anzahl an Wechselrichtern beinhalten und die Wechselrichter von der ersten und der zweiten Wechselrichtereinheit in parallel zueinander geschaltet sind.

## Revendications

1. Dispositif de commande pour un véhicule électrique comprenant :
une unité d'onduleur (1) comprenant une pluralité d'onduleurs (21a, 21b, 21c, et 21d), chacun des onduleurs comprenant une phase U, une phase V et une phase W et délivrant une puissance électrique pour entraîner un moteur électrique (2), chacune des phases U, V et W comprenant un élément latéral positif (24a) d'un bras supérieur et un élément latéral négatif (24b) d'un bras inférieur qui sont connectés électriquement en série, et
une structure de refroidissement (23) configurée pour rayonner la chaleur générée par l'élément latéral positif (24a) et l'élément latéral négatif (24b),
dans lequel la structure de refroidissement (23) comprend une planche de réception de chaleur (23a) pour recevoir la chaleur de l'élément latéral positif et de l'élément latéral négatif de chacune des phases, et un radiateur (23b) fixé à une surface de la planche de réception de chaleur (23a),
**caractérisé en ce que**
l'élément latéral positif (24a) et l'élément latéral négatif (24b) de chacune des phases sont stockés dans un paquet de dispositif semi-conducteur (22),
les paquets de dispositif semi-conducteur (22) sont fixés à l'autre surface de la planche de réception de chaleur (23a) opposée à la surface à laquelle le radiateur (23b) est fixé,
les paquets de dispositif semi-conducteur (22) des phases U, V et W de chacun des onduleurs (21a, 21b, 21c et 21d) sont disposés en ligne respectivement sur l'autre surface, et
les paquets de dispositif semi-conducteur (22) de chacune des phases U, V et W sont disposés sur une même rangée sur l'autre surface.

2. Dispositif de commande de véhicule électrique selon la revendication 1, **caractérisé en ce que** l'unité d'onduleur (1) comprend une première unité d'onduleur (33a) et une seconde unité d'onduleur (33b) qui sont connectées en parallèle l'une à l'autre, chacune de la première unité d'onduleur et de la seconde unité d'onduleur comprend un même nombre d'onduleurs, et les onduleurs de chacune de la première unité d'onduleur et de la seconde unité d'onduleur sont connectés en série l'un à l'autre.

3. Dispositif de commande de véhicule électrique selon la revendication 1, **caractérisé en ce que** l'unité d'onduleur (1) comprend une première unité d'onduleur (43a) et une seconde unité d'onduleur (43b) qui sont connectées en série l'une à l'autre, chacune de la première unité d'onduleur et de la seconde unité d'onduleur comprend un même nombre d'onduleurs, et les onduleurs de chacune de la première unité d'onduleur et de la seconde unité d'onduleur sont connectés en parallèle l'un à l'autre.
